# EUROPEAN PATENT SPECIFICATION

(11) **EP 2 184 932 B1**
(45) Date of publication and mention of the grant of the patent: **05.01.2011**
(21) Application number: 09175056.2
(22) Date of filing: 04.11.2009
(51) Int. Cl.: H04W 4/18, H04L 12/58, H04L 29/12

(54) **method, device and system for interworking between instant message and short message**
Verfahren, Vorrichtung und System zur Zusammenarbeit zwischen Sofortnachricht und Kurznachricht
Procédé, dispositif et système d'interfonctionnement entre un message instantané et un message court

(30) Priority: 05.11.2008 CN 200810217251
(43) Date of publication of application: 12.05.2010
(73) Proprietor: Huawei Technologies Co., Ltd., Longgang District, Shenzhen Guangdong 518129 (CN)
(72) Inventor: Huang, Wei, 518129, Shenzhen (CN); Li, Xinjie, 518129, Shenzhen (CN)
(74) Representative: Körber, Martin Hans

(56) References cited:
- WO-A-02/07396
- WO-A-2007/061771
- WO-A-2007/119902
- WO-A-2008/119883
- US-A1- 2002 165 000
- US-A1- 2003 023 691
- US-A1- 2005 114 533

## Description

### FIELD OF THE INVENTION

The present invention relates to the field of communication, and more particularly to a method, device and system for interworking between instant message and short message.

### BACKGROUND

Short message is a communication mode widely used in a mobile network, and the ability of sending and receiving short message is a basic ability that almost all mobile terminals have. Different mobile terminal users may exchange information conveniently and quickly through short message, and service providers may provide various value-added services for mobile phone users through short message.

Instant message is an emerging message service originated from the Internet. A sender and a receiver may transfer multimedia message content, such as text, video, audio, image, etc. in real time through an instant message service. The instant message service may be combined with a presence service to allow the sender to view an online state of the receiver in real time.

During implementing the present invention, the inventor has found that in the related art, if a calling user desires to send a message through an instant message client, the calling user needs to determine whether the message is to be sent to an instant message client or a mobile terminal when sending the message. Likewise, the calling user also needs to determine whether the message is to be sent to an instant message client or a mobile terminal when the calling user sends the message through a mobile terminal. The system can not select an effective manner for sending the message.

The problem that presently needs to be solved is how a system could automatically perform the conversion between a short message and an instant message in order to implement convenient and fast interworking between short message and instant message when a user sends a message.
WO 2008/119883 discloses that a communications system is arranged to recognise a short message that is transmitted from a SMS user to an IM user. The method according to the D1 comprises checking, in a transfer node, based on a received SMS routing inquiry, whether or not the called party is capable of using instant messaging. In addition, the method comprises checking, in an instant messaging server, whether or not the called party is currently online. If the called party is currently online, the instant messaging server transmits, towards the transfer node, a routing response including routing information on the instant messaging server. This routing information can then be delivered to a short message centre for the delivery of the actual short message. WO 02/07396 discloses a method of sending an instant message to an SMS user.

### SUMMARY

The embodiments of the present invention aim to automatically perform the conversion between a short message and an instant message by a system in order to implement convenient and fast interworking between short message and instant message when a user sends a message.

In order to solve the technical problem described above, an aspect of the embodiments of the present invention provides a method for sending messages, including: obtaining, by an instant message server, a Send Routing Information (SRI) request sent by a short message service center (SMSC), wherein the SRI request carries a mobile terminal identifier of a called user; returning, by an instant message server, to the SMSC an SRI response which carries an instant message server's own address as a mobile switching center (MSC) address; receiving, by an instant message server, a short message delivered by the SMSC based on the instant message server address carried by the SRI response; obtaining an instant message identifier of the called user based on a prestored correspondence relationship between the mobile terminal identifier of the called user and the instant message identifier of the called user, wherein the delivering the instant message to the instant message client of the called user comprises delivering the instant message to the instant message client of the called user based on the instant message identifier of the called user, determining, by the instant message server, whether the instant message client of the called user is online based on the instant message identifier of the called user; and if the instant message client of the called user is online, converting the short message into an instant message and delivering the instant message to an instant message client of the called user; if the instant message client of the called user is offline, sending the SRI request to an HLR based on the mobile terminal identifier of the called user; determining whether the mobile terminal of the called user is accessible based on the SRI response returned by the HLR; if the mobile terminal of the called user is accessible, delivering the short message to the mobile terminal of the called user based on the MSC address carried by the SRI response and currently registered by the mobile terminal of the called user; if the mobile terminal of the called user is inaccessible, waiting for an online notification of the instant message client of the called user and an accessibility notification of the mobile terminal of the called user which is sent by the HLR.

An aspect of the embodiments of the present invention provides a method for sending messages, including: receiving, by an instant message server, an instant message sent by a calling user; wherein the instant message carries an instant message identifier of the called user or a mobile terminal identifier corresponding to the instant message identifier of the called user, and the method further comprises: prestoring a correspondence relationship between the instant message identifier and the mobile terminal identifier of the called user, obtaining, by the instant message server, the instant message identifier of the called user, querying whether the instant message client of the called user is offline based on the instant message identifier of the called user; if the instant message client of the called user is offline, sending, by the instant message server, an SRI request to a home location register (HLR); receiving, by the instant message server, an SRI response returned by the HLR; and determining, by the instant message server, whether the mobile terminal of the called user is accessible based on the SRI response returned by the HLR; if the mobile terminal of the called user is accessible, converting the instant message into a short message and delivering the short message to a mobile switching center ,MSC, currently registered by a mobile terminal of a called user based on a MSC address carried by the SRI response such that the MSC deliver the short message to the mobile terminal of the called user; if the mobile terminal of the called user is inaccessible, waiting for an online notification of the instant message client of the called user and an accessibility notification of the mobile terminal of the called user which is sent by the HLR.
An aspect of the embodiments of the present invention provides an instant message server, including: a signaling processing module, configured to obtain an SRI request sent by a short message service center (SMSC) and return to the SMSC an SRI response which carries the instant message server's own address as a mobile switching center (MSC) address; a message processing module, configured to receive a short message delivered by the SMSC based on the instant message server's address carried by the SRI response, convert the short message into an instant message when the instant message client of the called user is online and send the instant message to an instant message client of the called user; a storage module, configured to store a correspondence relationship between the mobile terminal identifier of the called user and an instant message identifier of the called user; a acquiring module, configured to acquire the instant message identifier of the called user corresponding to the mobile terminal identifier of the called user from the storage module; a determining module, configured to determine whether the instant message client is online based on the instant message identifier of the called user; and the signaling processing module is further configured to sends an SRI request to the HLR based on the mobile terminal identifier of the called user if the instant message client of the called user is offline, and if the HLR returns a failed SRI response, which indicates that the mobile terminal of the called user is inaccessible now, the signaling processing module is further configured to receive an online notification of the instant message client of the called user and an accessibility notification of the mobile terminal of the called user which is sent by the HLR.
An aspect of the embodiments of the present invention provides an instant message server, including: a message receiving module, configured to receive an instant message sent by a calling user; a determining module, configured to determine whether the instant message client is online based on an instant message identifier of the called user; a route requesting module, configured to send an SRI request to a home location register (HLR) if the instant message client of the called user is offline; a signaling receiving module, configured to receive an SRI response returned by the HLR; and a message processing module, configured to convert the instant message into a short message and deliver the short message to a mobile switching center, MSC, currently registered by a mobile terminal of a called user based on a MSC address carried by the SRI response and if the mobile terminal of the called user is inaccessible indicated by the SRI response, the signaling receiving module (703) is further configured to receive an online notification of the instant message client of the called user and an accessibility notification of the mobile terminal of the called user which is sent by the HLR.

In the method, device and system provided by the embodiments of the present invention, the SIS intercepts the SRI request and the system automatically performs the conversion between the short message and the instant message, thereby implementing convenient and fast interworking between short message and instant message.

### BRIEF DESCRIPTION OF THE DRAWINGS

Fig.1 is a flowchart of a method for sending messages according to an embodiment of the present invention;

Fig.2 is a flowchart of a method for sending messages according to another embodiment of the present invention;

Fig.3 is a schematic structure diagram of a Signaling Interception System (SIS) according to an embodiment of the present invention;

Fig.4 is a schematic structure diagram of an instant message server according to an embodiment of the present invention;

Fig.5 is a schematic structure diagram of an instant message server according to another embodiment of the present invention;

Fig.6a is a schematic structure diagram of an instant message server according to another embodiment of the present invention;

Fig.6b is a schematic structure diagram of an instant message server according to another embodiment of the present invention;

Fig.7 is a schematic structure diagram of an instant message server according to another embodiment of the present invention;

Fig.8 is a schematic structure diagram of an instant message server according to another embodiment of the present invention;

Fig.9 is a schematic structure diagram of an instant message server according to another embodiment of the present invention;

Fig. 10 is a schematic structure diagram of a message sending system according to an embodiment of the present invention;

Fig. 11 is a schematic structure diagram of a message sending system according to another embodiment of the present invention;

Fig. 12 is a schematic structure diagram of a message sending system according to another embodiment of the present invention;

Fig.13 is a flowchart of a method for sending messages according to an embodiment of the present invention;

Fig. 14 is a flowchart of a method for sending messages according to another embodiment of the present invention; and

Fig. 15 is a flowchart of a method for sending messages according to another embodiment of the present invention.

### DETAILED DESCRIPTION

In order to clarify the objects, technical solutions and advantages of the present invention, the present invention is further described in detail below in conjunction with the accompany drawings and embodiments. It should be understood that the specific embodiments described here are merely used to illustrate the present invention, but not to limit the present invention.

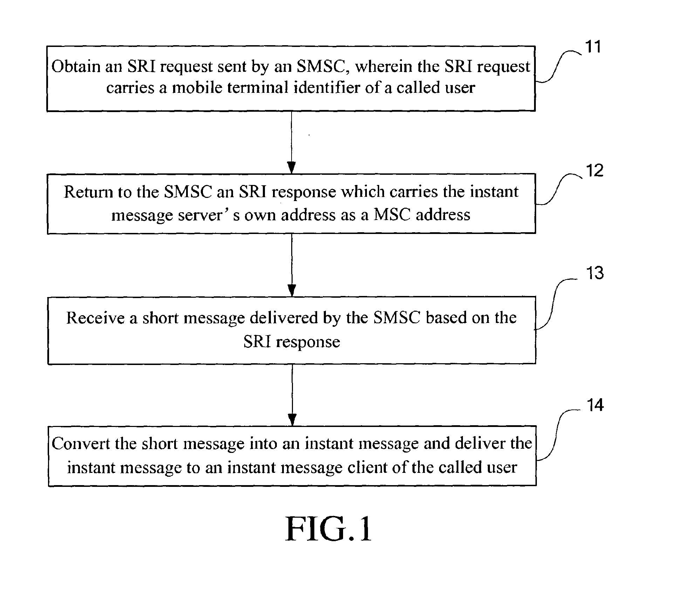

Fig.1 is a flowchart of a method for sending messages according to an embodiment of the present invention, which includes the following steps.

Step 11: A Send Routing Information (SRI) request sent by a Short Message Service Center (SMSC) is obtained. The SRI request carries a mobile terminal identifier of a called user.

When a calling user A sends a short message to a called user B through a mobile terminal (such as, mobile phone, personal digital assistant, etc.), the calling user A enters the mobile terminal identifier (such as, mobile phone number) of the called user B as a receiving identifier of the message on the mobile terminal. The calling user A may send the message to the called user B actively, or may make a response after receiving an instant message sent by the called user B through a network. When receiving the short message submitted by the calling user, the SMSC sends an SRI request to a Home Location Register (HLR), in which the mobile terminal identifier of the called user B entered by the calling user A is used as a destination number. A Signaling Interception System (SIS) intercepts the SRI request sent by the SMSC to the HLR and forwards the SRI request to an Instant Message Server (IM Server). Thus, the SRI request originally sent by the SMSC to the HLR is received by the instant message server. The SIS may intercept all the signaling information sent by the SMSC, identify the SRI request sent to the HLR from the information, forward the SRI request to the instant message server, and forward other signaling information to a signaling transfer point.

Step 12: An SRI response which carries the instant message server's own address as a Mobile Switching Center (MSC) address is returned to the SMSC.

Particularly, the instant message server may simulate the HLR to return the SRI response to the SMSC, and set the MSC address included in the SRI response and registered by the mobile terminal of the called user to the instant message server's own address in order to send the short message to the instant message server when the SMSC sends the short message based on the MSC address in the SRI response. The instant message server may forward the SRI response to the SMSC through the SIS. The message structure of the SRI request and the SRI response may be defined with the 09.02 protocol for Global System for Mobile Communications (GSM).

Step 13: The short message delivered by the SMSC based on the SRI response is received.

The SIS forwards the SRI response to the SMSC after receiving the SRI response forwarded by the instant message server, and the SMSC delivers the short message to the instant message server based on the SRI response.

Step 14: The short message is converted into an instant message and the instant message is delivered to an instant message client of the called user.

When sending the message to the called user through the mobile terminal, the calling user may enter the mobile terminal identifier of the called user, such as mobile phone number of the called user without any access code. In order to convert the received short message into the instant message and deliver the instant message to the instant message terminal of the called user, the instant message server needs to query an instant message identifier corresponding to the mobile terminal identifier of the called user, such as QQ number, MSN number, etc. which are bound to the mobile phone number of the called user. The information is submitted by the called user when selecting services and stored in the instant message server. In order to send the short message to the instant message terminal of the called user, the instant message server needs to convert the format of the message, i.e., convert the short message into the instant message. The instant message server may obtain the instant message identifier of the called user based on a prestored correspondence relationship between the mobile terminal identifier of the called user and the instant message identifier of the called user.

In this embodiment, the SRI message sent by the SMSC is intercepted such that the SMSC may send the short message to the instant message server which converts the short message into the instant message and sends the instant message to the called user. Thus, the system could automatically perform the conversion between a short message and an instant message when a user sends a message from a mobile terminal to an instant message client.

In an embodiment of the present invention, the manner for delivering messages may be selected based on an online state of the instant message client of the called user.

After the short message sent by the SMSC is received, the instant message server determines the online state of the instant message client of the called user based on the instant message identifier of the called user. If the instant message client of the called user is online, the short message is converted into the instant message and the instant message is delivered to the instant message client of the called user.

If the instant message client of the called user is offline, the short message is not converted into the instant message. Instead, the SRI request is sent to the HLR based on the mobile terminal identifier of the called user, and the short message is sent to the mobile terminal of the called user based on the MSC address included in the SRI response returned by the HLR and currently registered by the mobile terminal of the called user. Specifically, the instant message server delivers the short message to the MSC currently registered by the mobile terminal of the called user based on the SRI response after receiving the SRI response, and the MSC delivers the short message to the mobile terminal of the called user after receiving the short message.

A possible case may be that both the instant message client and the mobile terminal of the called user are offline (such as, the QQ is offline and the mobile phone is turned off) such that the message could not be sent to the mobile terminal of the called user. Therefore, in an embodiment of the present invention, after the SRI response returned by the HLR is received, a determination as to whether the mobile terminal of the called user is accessible may be made. If the mobile terminal of the called user is accessible, the SRI response returned by the HLR carries the MSC address currently registered by the mobile terminal of the called user. If the mobile terminal of the called user is inaccessible, the HLR returns a failed SRI response to the instant message server. The SRI response may carry information about specific reasons; such as the mobile terminal of the called user is turned off, the memory is full, etc. After receiving the failed SRI response, the instant message server waits for an online notification of the instant message client of the called user and an accessibility notification of the mobile terminal of the called user which is sent by the HLR. Specifically, when the mobile terminal of the called user is inaccessible, the HLR stores the address of the instant message server in its waiting list; and when the mobile terminal of the called user is accessible, the HLR may notify the instant message server by sending an AlertSC message. In addition, the instant message server may receive the online notification of the instant message client of the called user. If the instant message server receives the online notification of the mobile terminal of the called user firstly, the instant message server delivers the short message to the mobile terminal of the called user. If the instant message server receives the online notification of the instant message client of the called user firstly, the instant message server converts the short message into the instant message and delivers the instant message to the instant message client of the called user.

In an embodiment of the present invention, when the SRI request sent by the SMSC is obtained, the online state of the instant message client of the called user may be determined. Specifically, when the SRI request sent by the SMSC is obtained, the instant message server obtains the instant message identifier of the called user based on the prestored correspondence relationship between the mobile terminal identifier of the called user and the instant message identifier of the called user, determines the online state of the instant message client of the called user based on the instant message identifier of the called user, and if the instant message client of the called user is online, returns to the SMSC the SRI response which carries the instant message server's own address as the MSC address such that the SMSC may send the short message to the instant message server based on the MSC address. The instant message server may forward the SRI response to the SMSC through the SIS.

If the instant message client of the called user is offline, the instant message server sends the SRI request to the HLR, and forwards to the SIS the SRI response which includes the MSC address currently registered by the called user and is returned by the HLR. The SIS forwards the SRI response to the SMSC. The SMSC delivers the message to the MSC currently registered by the called user based on the SRI response. The MSC delivers the message to the mobile terminal of the called user.

In addition, in the embodiment of the present invention, the called user may configure a message receiving strategy in which, for example, a message may be received by the mobile terminal when the instant message client is offline and received by the instant message client when the instant message client is online, or a message may be received only by the mobile terminal, or a message may be received only by the instant message client. Additionally, the called user may configure other message receiving strategies in which, for example, a message may be received by the instant message client in a certain time period and received by the mobile terminal in other time periods, or a message which is sent using a certain calling number may be received by the instant message client and a messages which is sent using other calling numbers may be received by the mobile terminal, etc. The instant message server determines how to deliver a message based on the message receiving strategy configured by the called user.

When the called user does not configure any message receiving strategy, the instant message server may configure a default message receiving strategy for the called user in which a message may be received by the mobile terminal when the instant message client is offline and received by the instant message client when the instant message client is online.

When the message receiving strategy configured by the called user or the default message receiving strategy of the system is that a message may be received by the mobile terminal when the instant message client is offline and received by the instant message client when the instant message client is online, the detailed implementation of such message receiving strategy will not be further illustrated since it has been described in detail in the previous embodiment.

In this embodiment, it may be determined as to how to receive a message based on the online state of the instant message client of the called user or the user-defined message receiving strategy, thereby ensuring the message may be received in time and the success rate of message delivering may be improved. When the calling user sends the message, neither any instant message software needs to be installed on his mobile terminal nor the mobile terminal needs to be connected to the GRPS network. It is only needed to enter the mobile phone number of the called user on the mobile terminal so as to send the message to the called user without the need of determining whether the message should be sent to the mobile terminal or the instant message client of the opposite party. Thus the user may operate more conveniently and easily.

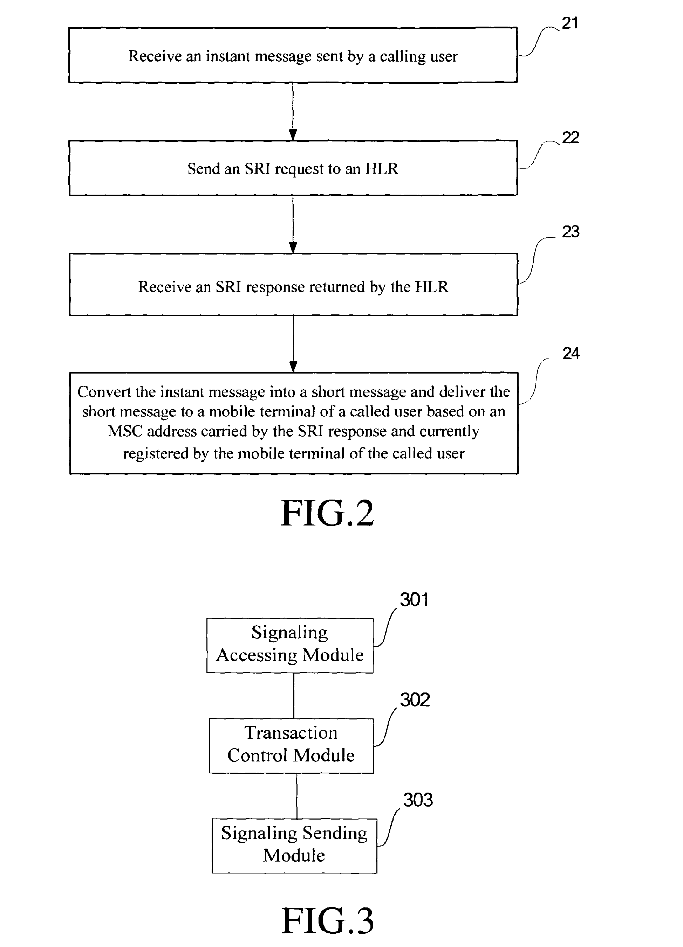

Fig.2 is a flowchart of a method for sending messages according to an embodiment of the present invention, which includes the following steps.

Step 21: An instant message sent by a calling user is received.

The calling user A sends the instant message, which is firstly received by an instant message server, to a called user B.

The instant message carries an instant message identifier of the called user or a mobile terminal identifier corresponding to the instant message identifier of the called user.

When the calling user A sends the instant message, the calling user A enters a called identifier which may be the mobile terminal identifier of the called user B, such as mobile phone number, or may be the instant message identifier of the called user B, such as QQ number. A correspondence relationship between the instant message identifier and the mobile terminal identifier of the called user is provided by the called user when selecting services and prestored in the instant message server.

Step 22: An SRI request is sent to an HLR.

Specifically, the instant message server may simulate the SMSC to send the SRI request to the HLR based on the mobile terminal identifier of the called user. If the called identifier entered by the calling user A when the calling user A sends the instant message is the mobile terminal identifier of the called user B, the instant message server directly sends the SRI request to the HLR to which the called user B belongs based on the mobile terminal identifier. If the called identifier entered by the calling user A when the calling user A sends the instant message is the instant message identifier of the called user B, the instant message server firstly finds the corresponding mobile terminal identifier based on the instant message identifier and the locally stored correspondence relationship between the instant message identifier and the mobile terminal identifier of the called user, and then sends the SRI request to the HLR to which the called user B belongs based on the mobile terminal identifier.

Step 23: An SRI response returned by the HLR is received.

After the HLR has received the SRI request sent by the instant message server, if the mobile terminal of the called user B is accessible, the SRI response containing an MSC address currently registered by the called user is returned to the instant message server.

If the mobile terminal of the called user B is inaccessible, the HLR returns a failed SRI response to the instant message server and stores the address of the instant message server in its waiting list. After receiving the failed SRI response, the instant message server waits for an online notification of the instant message client of the called user and an accessibility notification of the mobile terminal of the called user which is sent by the HLR.

If the mobile terminal of the called user is accessible, the HLR notifies the instant message server by sending an AlertSC message. In addition, the instant message server may receive the online notification of the instant message client of the called user. If the instant message server receives the accessibility notification of the mobile terminal of the called user firstly, the instant message server converts the instant message into a short message and delivers the short message to the mobile terminal of the called user. If the instant message server receives the online notification of the instant message client of the called user firstly, the instant message server delivers the instant message to the instant message client of the called user.

Step 24: The instant message is converted into the short message, and the short - message is delivered to the mobile terminal of the called user based on the MSC address carried by the SRI response and currently registered by the mobile terminal of the called user.

After receiving the SRI response, the instant message server converts the instant message into the short message and sends the short message to the MSC currently registered by the called user such that the MSC may deliver the short message to the mobile terminal of the called user.

In the method for sending messages provided by the present embodiment, the instant message server simulates the SMSC to send the SRI request to the HLR based on the mobile terminal identifier of the called user. Thus, the system could automatically perform the conversion between a short message and an instant message when a user sends a message from an instant message client to a mobile terminal.

Furthermore, the correspondence relationship between the mobile terminal identifier and the instant message identifier of the calling user A may be prestored in the instant message server. The calling user A provides the correspondence relationship between the mobile terminal identifier and the instant message identifier before sending the instant message. For example, the calling user A may bind his mobile terminal identifier with his instant message identifier (for example, binds his mobile phone number with his QQ number) before sending the instant message. Alternatively, the calling user A may provide his mobile terminal identifier when sending the instant message, for example, the calling user A may enter his mobile phone number on a web page when sending the instant message through the web page. When converting the instant message into the short message and delivering the sort message, the instant message server sets a calling number of the short message to the mobile terminal identifier provided by the calling user A. If the calling user A sends the message with his instant message identifier, the instant message server finds the mobile terminal identifier of the calling user A based on the prestored correspondence relationship between the mobile terminal identifier and the instant message identifier of the calling user A and then sets the calling number of the short message to the mobile terminal identifier. Thus, when the called user B receives the short message, the calling number is displayed as the mobile terminal identifier of the calling user A without any access code and other characters. Therefore, the called user B can know the identity of the calling user based on the calling number and make a response more conveniently and reassuringly.

Before sending the SRI request to the HLR, the instant message server may query whether the instant message client of the called user is offline based on the instant message identifier of the called user. When the calling user A enters the mobile terminal identifier of the called user B, the instant message server finds the instant message identifier of the called user based on the prestored correspondence relationship between the instant message identifier and the mobile terminal identifier of the called user, and queries whether the instant message client of the called user is offline based on the instant message identifier. If the instant message client of the called user B is offline, the instant message server sends the SRI request to the HLR.

In addition, in the embodiment of the present invention, the called user may configure a message receiving strategy in which, for example, a message may be received by the mobile terminal when the instant message client is offline and received by the instant message client when the instant message client is online, or a message may be received only by the mobile terminal, or a message may be received only by the instant message client. Additionally, the called user may configure other message receiving strategies in which, for example, a message may be received by the instant message client in a certain time period and received by the mobile terminal in other time periods, or a message which is sent using a certain calling number may be received by the instant message client and a message which is sent using other calling numbers may be received by the mobile terminal, etc. The instant message server determines how to deliver a message based on the message receiving strategy configured by the user.

When the called user does not configure any message receiving strategy, the instant message server may configure a default message receiving strategy for the called user in which a message may be received by the mobile terminal when the instant message client is offline and received by the instant message client when the instant message client is online.

When the message receiving strategy configured by the called user or the default message receiving strategy of the system is that a message may be received by the mobile terminal when the instant message client is offline and received by the instant message client when the instant message client is online, the detailed implementation of such message receiving strategy will not be further illustrated since it has been described in detail in the previous embodiment shown in Fig.2.

In this embodiment, the receiver may be determined based on the online state of the instant message client of the called user. Further, after the mobile terminal of the called user has received the short message converted from the instant message by the instant message server, the calling number displayed on the mobile terminal is the mobile phone number of the sender of the message without any access code, such that the called user may determine the identity of the sender of the message conveniently and respond to the message easily. The instant message server may also receive the online notification of the instant message terminal and the mobile terminal of the called user, thereby ensuring the message may be received in time and the success rate of message delivering may be improved. In addition, the called user is allowed to customize the manner for receiving messages, thus having more autonomy.

Fig.3 is a schematic structure diagram of an SIS according to an embodiment of the present invention, which includes a signaling accessing module 301, a transaction control module 302 and a signaling sending module 303.

The signaling accessing module 301 is configured to intercept an SRI request sent by an SMSC.

A possible manner for the signaling accessing module 301 to implement the interception is that the signaling accessing module 301 is connected directly to the SMSC through the No.7 signaling protocol. The signaling accessing module receives all the signaling requests delivered by the SMSC and determines whether a request is an SRI request based on an operation code in the MAP layer in the request. If the request is an SRI request, the signaling accessing module 301 reports the SRI request to the transaction control module.

The transaction control module 302 is connected to the signaling accessing module 301 and configured to forward the SRI request to an instant message server and receive an SRI response sent by the instant message server

An MSC address in the SRI response is the address of the instant message server.

The signaling sending module 303 is configured to forward the SRI response sent by the instant message server to the SMSC such that the SMSC may send a short message to the instant message server.

The SMSC, the instant message server and the SIS communicate with each other through the No.7 signaling protocol. Regarding the networking, the SMAC, the instant message server and the SIS may be connected to each other directly or may perform signaling transfer using a signaling transfer point (STP).

The SIS provided by this embodiment may be connected directly to a signaling network, intercept an SRI request delivered by the SMSC and forward the SRI request to the instant message server, such that a short message may be converted into an instant message without the need of reconfiguring the SMSC.

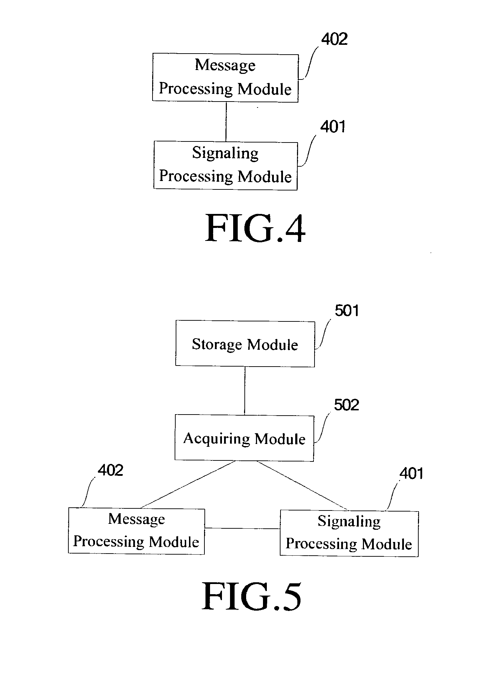

Fig.4 is a schematic structure diagram of an instant message server according to an embodiment of the present invention, which includes a signaling processing module 401 and a message processing module 402.

The signaling processing module 401 is configured to obtain an SRI request which carries a mobile terminal identifier of a called user and is sent by an SMSC, and return to the SMSC an SRI response which carries the instant message server's own address as an MSC address.

The SRI request sent by the SMSC is sent to an HLR based on the mobile terminal identifier of the called user carried by the SRI request. A SIS intercepts the SRI request and forwards the SRI request to the instant message server. After receiving the SRI request, the signaling processing module 401 of the instant message server returns to the SMSC the SRI response which carries an MSC address as the address of the instant message server.

The message processing module 402 is configured to receive a short message delivered by the SMSC based on the SRI response, convert the short message into an instant message and send the instant message to an instant message client of the called user.

Because the MSC address carried by the SRI response returned to the SMSC is the address of the instant message server, the short message delivered by the SMSC based on the SRI response is to be delivered to the instant message server. After receiving the short message, the message processing module 402 converts the short message into the instant message and sends the instant message to the instant message client of the called user.

The instant message server provided by this embodiment may be connected directly to a signaling network and automatically convert a short message into an instant message.

According to this embodiment, as shown in Fig.5, the instant message server may further include a storage module 501 and an acquiring module 502.

The storage module 501 is configured to store a correspondence relationship between the mobile terminal identifier of the called user and an instant message identifier of the called user.

The acquiring module 502 is configured to acquire the instant message identifier of the called user corresponding to the mobile terminal identifier of the called user from the storage module 501.

Before the message processing module 402 converts the short message into the instant message and delivers the instant message to the instant message client of the called user, the acquiring module 502 queries the instant message identifier of the called user corresponding to the mobile terminal identifier of the called user from the storage module 501 based on the mobile terminal identifier of the called user carried by the SRI request or the short message.

Based on the embodiment shown in Fig.5, the instant message server may further include a determining module 601.

The determining module 601 is configured to determine an online state of the instant message client of the called user based on the instant message identifier of the called user.

After the signaling processing module 401 acquires the SRI request sent by the SMSC, the determining module 601 may make a determination before returning to the SMSC the SRI response which carries the instant message server's own address as the MSC address (the first case), or make a determination after the message processing module 402 has received the short message delivered by the SMSC based on the SRI response (the second case).

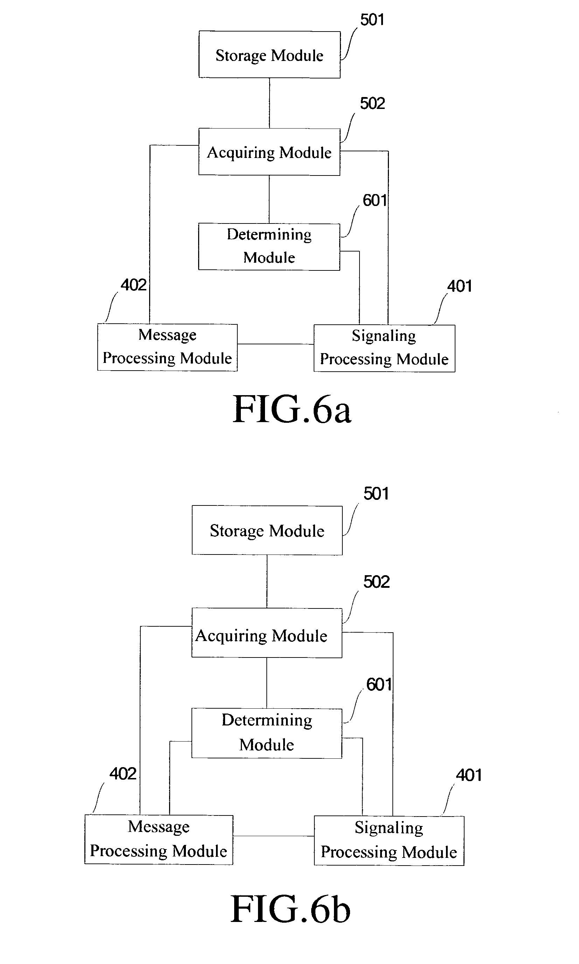

In the first case, as shown in Fig.6a, after acquiring the instant message identifier of the called user, the acquiring module 502 notifies the instant message identifier of the called user to the determining module 601. The determining module 601 finds the called user based on the instant message identifier of the called user to determine whether the instant message client is online now. If the instant message client is online, the determining module 601 notifies the signaling processing module 401 that the instant message client is online, and the signaling processing module 401 returns to the SMSC the SRI response which carries the instant message server's own address as the MSC address. After receiving the short message delivered by the SMSC based on the SRI response, the message processing module 402 converts the short message into the instant message and sends the instant message to the instant message client of the called user.

If the instant message client of the called user is offline, the signaling processing module 401 sends the SRI request to the HLR, receives the SRI response which is returned by the HLR and carries the MSC address, and forwards the SRI response to the SMSC. Then, the SMSC forwards the short message to the MSC such that the MSC may deliver the short message to the mobile terminal of the called user.

In the second case, as shown in Fig.6b, after acquiring the instant message identifier of the called user, the acquiring module 502 notifies the instant message identifier of the called user to the determining, module 601. The determining module 601 finds the called user based on the instant message identifier of the called user to determine whether the instant message client is online now. If the instant message client is online, the determining module 601 notifies the message processing module 402 that the instant message client is online, and the message processing module 402 converts the short message into the instant message and sends the instant message to the instant message client of the called user.

If the instant message client of the called user is offline now, the signaling processing module 401 sends the SRI request to the HLR based on the mobile terminal identifier of the called user. If the HLR returns the SRI response carrying the MSC address currently registered by the mobile terminal of the called user, which indicates that the mobile terminal of the called user is accessible now, the message processing module 402 delivers the received short message to the MSC based on the SRI response. Then the MSC delivers the short message to the mobile terminal of the called user. If the HLR returns a failed SRI response, which indicates that the mobile terminal of the called user is inaccessible now, the signaling processing module 401 is further configured to receive an online notification of the instant message client of the called user and an accessibility notification of the mobile terminal of the called user which is sent by the HLR. The accessibility notification is sent from the HLR to the signaling processing module 401 in the form of AlertSC message.

The instant message server provided by this embodiment may be connected directly to a signaling network, convert a short message into an instant message and determine the manner for delivering a message based on an online state of the instant message client of the called user, thereby ensuring that the user can receive the message in time.

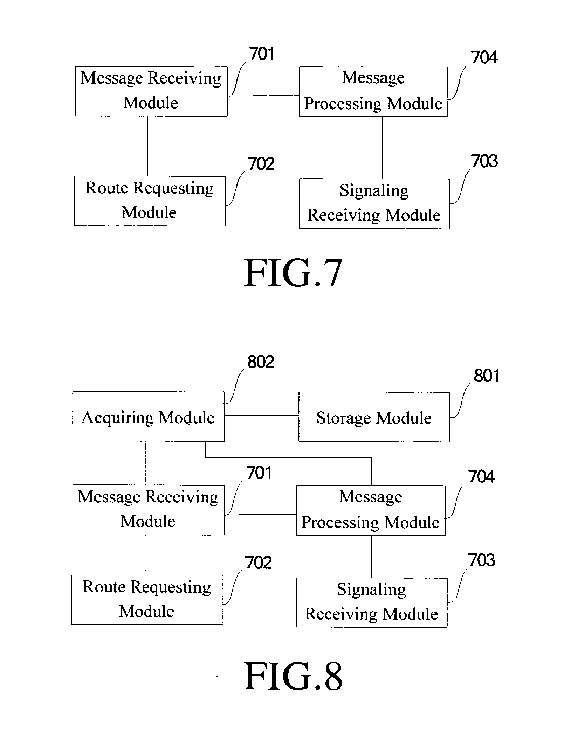

Fig.7 is a schematic structure diagram of an instant message server according to another embodiment of the present invention, which includes a message receiving module 701, a route requesting module 702, a signaling receiving module 703 and a message processing module 704.

The message receiving module 701 is configured to receive an instant message sent by a calling user.

When the calling user A sends the instant message, a called identifier entered by the calling user A is a mobile terminal identifier of a called user B, such as mobile phone number.

The route requesting module 702 is configured to send an SRI request to an HLR.

Specifically, the route requesting module 702 sends the SRI request to the HLR based on the mobile terminal identifier of the called user B.

The signaling receiving module 703 is configured to receive an SRI response returned by the HLR.

If the mobile terminal of the called user B is accessible, the SRI response returned by the HLR carries an MSC address currently registered by the mobile terminal of the called user B. If the mobile terminal of the called user B is inaccessible, the SRI response returned by the HLR is a failed SRI response.

The message processing module 704 is configured to convert the instant message into a short message and deliver the short message to the mobile terminal of the called user based on the MSC address carried by the SRI response and currently registered by the mobile terminal of the called user.

If the mobile terminal of the called user B is accessible, the message processing module 704 converts the instant message into the short message and delivers the short message to the MSC based on the MSC address carried by the SRI response. Then the MSC delivers the short message to the mobile terminal of the called user B.

According to this embodiment, as shown in Fig.8, the instant message server may further include a storage module 801 and an acquiring module 802.

The storage module 801 is configured to store a correspondence relationship between the mobile terminal identifier of the called user and the instant message identifier of the called user.

The acquiring module 802 is configured to acquire the instant message identifier of the called user corresponding to the mobile terminal identifier of the called user from the storage module 801 when a receiving identifier carried by the instant message sent by the calling user is the mobile terminal identifier of the called user, and acquire the mobile terminal identifier of the called user corresponding to the instant message identifier of the called user from the storage module 801 when the receiving identifier carried by the instant message sent by the calling user is the instant message identifier of the called user.

When the calling user A sends the instant message, if the called identifier which is entered by the calling user A is the instant message identifier of the called user B, such as QQ number, the acquiring module 802 acquires the corresponding mobile terminal identifier from the storage module 801 based on the instant message identifier. If the called identifier which is entered by the calling user A is the mobile terminal identifier of the called user B, the acquiring module 802 acquires the corresponding instant message identifier from the storage module 801 based on the mobile terminal identifier.

The storage module 801 is further configured to store a correspondence relationship between the instant message identifier and the mobile terminal identifier of the calling user.

The acquiring module 802 is further configured to acquire the mobile terminal identifier of the calling user and the message processing module 704 is further configured to set the calling identifier of the short message to the mobile terminal identifier of the calling user. Thus, when the called user has received the short message, the true mobile terminal identifier of the calling user is displayed such that the called user may make a response conveniently and reassuringly.

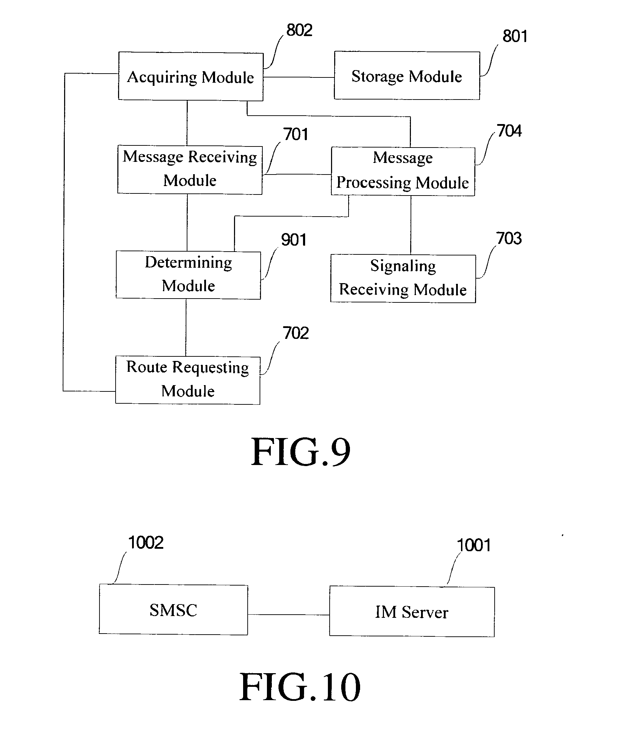

As shown in Fig.9, the instant message server further includes a determining module 901 configured to determine an online state of the instant message client of the called user based on the instant message identifier of the called user. The instant message identifier of the called user may be provided directly by the user or may be acquired by the acquiring module 802 based on the mobile terminal identifier of the user.

Before the route requesting module 702 sends the SRI request to the HLR, the determining module 901 performs the determination. If the instant message client of the called user is offline, the determining module 901 notifies the route requesting module 702 to send the SRI request to the HLR.

If the instant message client of the called user is offline and the signaling receiving module 703 has received the failed SRI response returned by the HLR which indicates that the mobile terminal of the called user is inaccessible now, the signaling receiving module 703 is further configured to receive an online notification of the instant message client of the called user and an accessibility notification of the mobile terminal of the called user which is sent by the HLR. The accessibility notification is sent from the HLR to the signaling receiving module 703 in the form of AlertSC message.

The instant message server provided by this embodiment may be connected directly to a signaling network, convert an instant message into a short message and determine the manner for delivering a message based on an online state of the instant message client of the called user, thereby ensuring that the user may receive the message in time. In addition, the mobile terminal identifier of the calling user may be displayed correctly on the mobile terminal of the called terminal such that the called user may make a response conveniently.

Fig. 10 is a schematic structure diagram of a message sending system according to an embodiment of the present invention, which includes an instant message server 1001 and an SMSC 1002.

The instant message server 1001 is configured to acquire an SRI request sent by an SMSC, return to the SMSC an SRI response which carries the address of the instant message server 1001 as an MSC address, receive a short message delivered by the SMSC based on the SRI response, convert the short message into an instant message and send the instant message to an instant message client of a called user.

The specific implementation of the functions of the instant message server has been described in detail with reference to the embodiment shown in Fig.1, and thus will not be described repeatedly.

The SMSC 1002 is configured to send the SRI request and deliver the short message to the instant message server based on the SRI response.

The SMSC sends to the HLR the SRI request in which a destination number is a mobile terminal identifier of the called user (such as, mobile phone number).

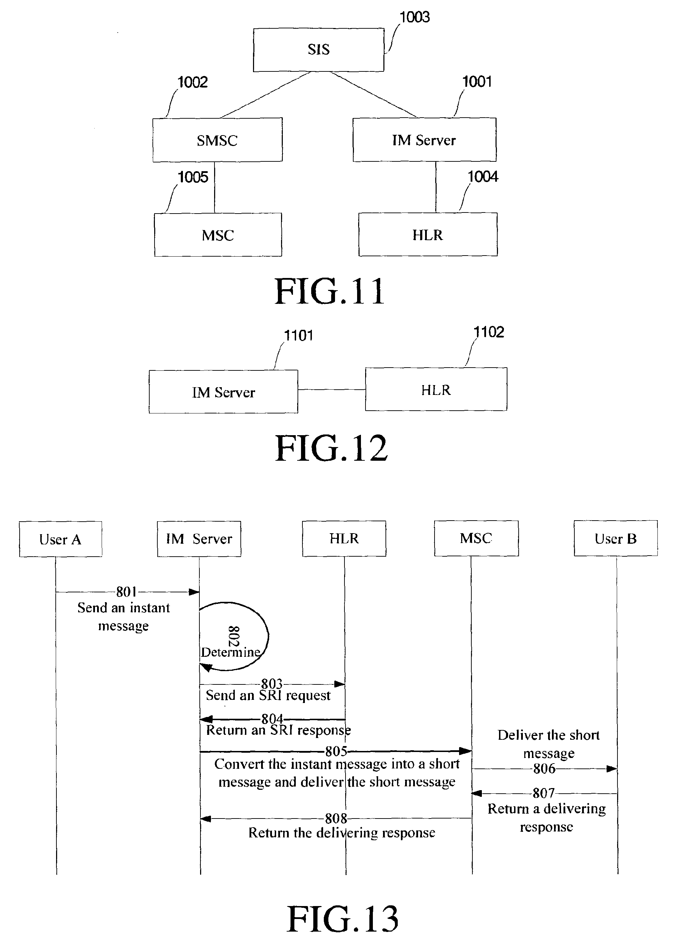

The message sending system may further include an SIS 1003 which, as shown in Fig.11, is configured to intercept the SRI request sent by the SMSC and forward the SRI request to the instant message server.

The SMSC 1002, the instant message server 1001 and the SIS 1003 communicate with each other through the No.7 signaling protocol. Regarding the networking, the SMAC 1002, the instant message server 1001 and the SIS 1003 may be connected to each other directly or may perform signaling transfer using an STP.

In this embodiment, the instant message server is connected directly to the signaling network and the SIS intercepts the SRI request sent by the SMSC such that the system may automatically convert the short message into the instant message and send the instant message to the instant message terminal.

The instant message server is further configured to query an online state of the called user and a configured message receiving strategy, and store a correspondence relationship between the instant message identifier and the mobile terminal identifier.

The system may further include an HLR 1004 which may receive the SRI request forwarded by the instant message server and return the SRI response to the instant message server. The HLR 1004 is further configured to send to the instant message server an accessibility notification of the mobile terminal of the called user which may be in the form of AlertSC message.

If the user needs to receive the message in the form of short message, the instant message server sends the SRI request to the HLR to which the called user belongs, and the HLR returns to the instant message server the SRI response containing the MSC address currently registered by the mobile terminal of the called user. Then the instant message server forwards the SRI response to the SIS which, in turn, forwards the SRI response to the SMSC. The SMSC delivers the short message to the MSC 1005 currently registered by the called user based on the result of SRI, and the MSC 1005 delivers the short message to the called user. After receiving the short message, the called user returns a delivering response to the MSC. After receiving the delivering response, the MSC returns the delivering response to the SMSC.

Fig.12 is a schematic structure diagram of a message sending system according to another embodiment of the present invention, which includes an instant message server 1101 and an HLR 1102.

The instant message server 1101 is configured to receive an instant message sent by a calling user, send an SRI request to the HLR, receive an SRI response returned by the HLR, convert the instant message into a short message and send the short message to a mobile terminal of a called user based on an MSC address carried by the SRI response and currently registered by the mobile terminal of the called user.

The HLR 1102 is connected to the instant message server 1101 and configured to return to the instant message server the SRI response containing the MSC address currently registered by the user.

In this embodiment, the instant message server is connected directly to a signaling network, but not to the SMSC as a service provider such that the system may automatically convert an instant message into a short message and send the short message to the mobile terminal. Furthermore, if the calling user provides a mobile terminal identifier corresponding to an instant message client, the calling user's mobile phone number without access code may be displayed directly on the mobile phone of the called user.

Fig.13 is a flowchart of a method for sending messages according to an embodiment of the present invention.

Step 801: A calling user A submits an instant message sent to a called user B to an instant message server.

The calling user A may provide a mobile terminal identifier corresponding to his instant message identifier to the instant message server before sending the message or when sending the message.

Step 802: The instant message server determines the manner for delivering the message based on an online state of an instant message client of the called user B or a configured message receiving strategy.

If the called user B configures the message receiving strategy, the instant message server determines the manner for sending the message based on the message receiving strategy. If no message receiving strategy is configured, the instant message server determines the manner for sending the message based on the online state of the instant message client of the called user B. If the instant message client of the called user B is online, the instant message client receives the message in the form of instant message. If the instant message client of the called user B is offline, the mobile terminal receives the message in the form of short message.

If the called user B needs to receive the instant message in the form of short message, the method proceeds to step 803. Otherwise, the instant message server delivers the message to the instant message client of the called user B according to a normal process.

Step 803: The instant message server sends the SRI request to an HLR.

When the calling user A sends the instant message, a called identifier which is entered by the calling user A may be a mobile terminal identifier of the called user B, such as mobile phone number, or an instant message identifier of the called user B, such as QQ number. If the calling user A enters the instant message identifier of the called user B and the called user B needs to receive the messages in the form of short message, the instant message server queries the mobile terminal identifier corresponding to the instant message identifier of the called user B, such as mobile phone number bound to the QQ number. The instant message identifier and the mobile terminal identifier of the called user B are provided by the called user B when selecting services and stored in the instant message server. The instant message server sends the SRI request based on the mobile terminal identifier of the called user B.

If the mobile phone of the called user B is offline, the SRI request sent from the instant message server to the HLR fails (as shown in the third step in Fig. 3) and the HLR stores the address of the instant message server in its waiting list. If the mobile phone of the called user B is turned on, the HLR notifies the instant message server by sending an AlertSC message. Because the instant message server may receive an online notification of the instant message client of the called user B, the instant message server may receive the notification in time and deliver the message to the terminal which is online as long as one of the terminals of the called user B is online.

Step 804: The HLR returns to the instant message server an SRI response containing the MSC address currently registered by the mobile terminal of the called user B.

Step 805: The instant message server converts the instant message into a short message and delivers the short message to an MSC in a roaming location of the called user B.

Step 806: The MSC delivers the short message to the mobile terminal of the called user B.

Step 807: The mobile phone of the called user B returns a delivering response to the MSC.

Step 808: The MSC returns the delivering response to the instant message server.

In this embodiment, the system may automatically convert an instant message into a short message. Furthermore, if the calling user provides the mobile terminal identifier corresponding to his instant message identifier, after the mobile terminal of the called user has received the short message converted from the instant message by the instant message server, a calling number displayed on the mobile terminal of the called user is a mobile terminal identifier of a sender of the message without any access code, such as mobile phone number, thus the called user can determine the identity of the sender of the message conveniently and can make a response directly.

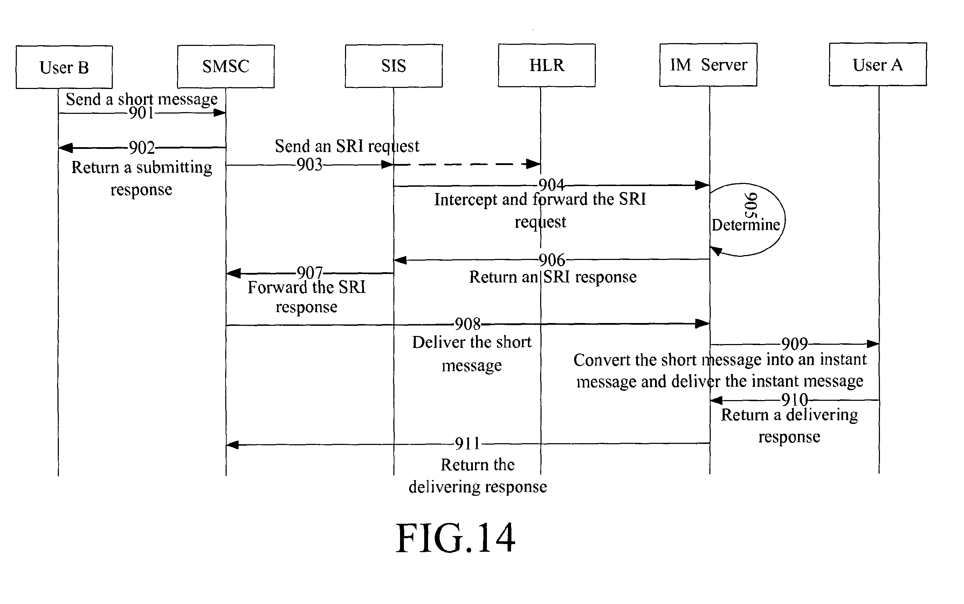

The response process of the called user B is shown in Fig.14, which is a flowchart of a method for sending messages according to another embodiment. The called user may not only respond to a message after receiving the message, but also send a message actively to the instant message client of the calling user. In this case, B is the calling user and A is the called user.

Step 901: The user B sends a short message to the user A through a mobile terminal (such as, mobile phone).

The called number is the mobile terminal identifier (such as, mobile phone number) of the user A.

Step 902: The SMSC returns a submitting response to the user B after receiving the short message submitted by the user B.

Step 903: The SMSC sends to the HLR an SRI request in which a destination number is the mobile phone number of the user A.

Step 904: The SIS intercepts the SRI request delivered by the SMSC and forwards the SRI request to the instant message server.

Step 905: The instant message server determines the manner for sending the message based on an online state of an instant message client of the user A or a configured message receiving strategy.

This operation is the same as that of step 802.

If the user A needs to receive the message through the instant message client, the method proceeds to step 906.

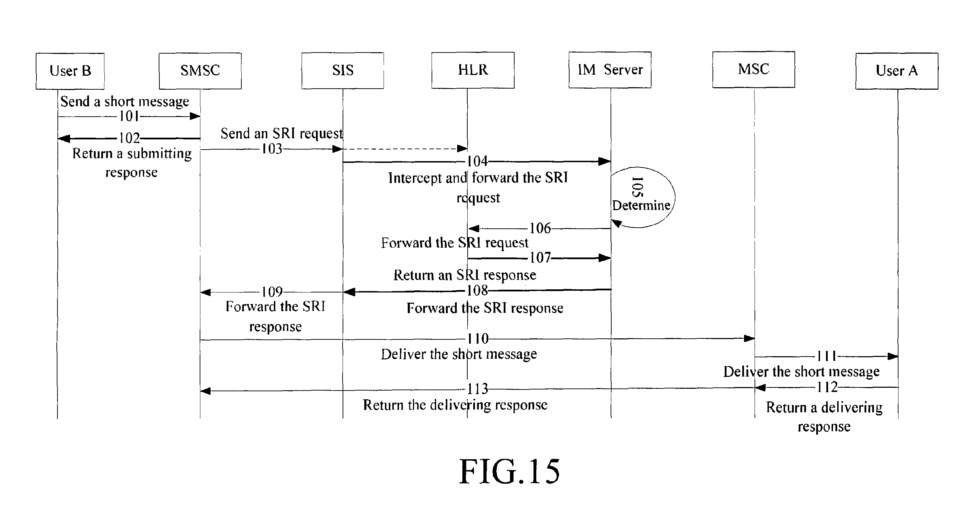

The case in which the user A needs to receive the message through the mobile terminal will be described in detail with reference to the next embodiment shown in Fig. 15.

Step 906: The instant message server returns to the SIS an SRI response in which the returned MSC address is the address of the instant message server.

Step 907: The SIS forwards the SRI response to the SMSC.

Step 908: The SMSC delivers the short message to the instant message server based on the result of SRI.

Step 909: The instant message server converts the short message into an instant message and delivers the instant message to the instant message client of the user A.

Step 910: The instant message client of the user A returns a delivering response to the instant message server.

Step 911: The instant message server returns the delivering response to the SMSC.

In this embodiment, the system may automatically convert a short message into an instant message. Neither any instant message software needs to be installed on the mobile terminal of the calling user, nor needs the mobile terminal of the calling user to be connected to the GRPS network. It is only needed to simply enter the mobile phone number of the called user on the mobile terminal of the calling user so as to send the short message to the called user. The called user may receive the message through the instant message client and may define the manner for receiving the message by itself.

Fig. 15 is a flowchart of a method according to an embodiment, which is performed when the called user needs to receive messages through the mobile terminal in the previous embodiment. The method in Fig. 15 includes the following steps.

Step 101: The user B sends a short message to the user A through a mobile terminal (such as, mobile phone).

The called number is the mobile terminal identifier (such as, mobile phone number) of the user A.

Step 102: The SMSC returns a submitting response to the user B after receiving the short message submitted by the user B.

Step 103: The SMSC sends to the HLR an SRI request in which a destination number is the mobile phone number of the user A.

Step 104: The SIS intercepts the SRI request delivered by the SMSC and forwards the SRI request to the instant message server.

Step 105: The instant message server determines the manner for sending the message based on an online state of an instant message client of the user A or a configured message receiving strategy.

This operation is the same as that of step 802.

The user A needs to receive the message through the mobile terminal now.

Step 106: The instant message server forwards the SRI request to the HLR to which the user A belongs.

Step 107: The HLR returns an SRI response to the instant message server.

The SRI response contains an MSC address currently registered by the mobile terminal of the user A.

Step 108: The instant message server forwards the SRI response to the SIS.

Step 109: The SIS forwards the SRI response to the SMSC.

Step 110: The SMSC delivers the short message to an MSC address currently registered by the called user B based on the result of SRI.

Step 111: The MSC delivers the short message to the user A.

Step 112: The user A returns a delivering response to the MSC after receiving the short message.

Step 113: The MSC returns the delivering response to the SMSC.

In this embodiment, the instant message server and the SIS are connected to the signaling network so as to ensure that a message may be sent to the receiver even if a user selects to receive a short message through a mobile terminal. In combination with the embodiment as shown in Fig.9, it can be determined as to whether the message is delivered in the form of instant message or in the form of short message based on a message receiving strategy selected by the user. Thus, it is only needed to simply enter the mobile number of the called user by the calling user to send the short message; the called user may receive the message in different manners. Furthermore, when both the mobile terminal and the instant message terminal of the called user are offline, the instant message server may store the message that is needed to be delivered, receive an online notification of the instant message terminal of the user and an online notification of the mobile terminal of the user which is sent by the HLR, and select the manner for delivering the message based on the receiving order or a user-defined message receiving strategy, thereby ensuring that the called user may receive the message in time.

Through the description of the above embodiments, those skilled in the art may clearly understand that the embodiments of the present invention may be implemented by means of software and necessary general hardware platform without the need of introducing independent functional components. Based on such understanding, the technical solutions of the embodiments of the present invention or parts of the technical solutions which make contributions to the related art may be embodied in the form of computer software product which is stored in a storage medium. The storage medium contains several instructions for performing the methods according to the embodiments of the present invention. For example, the storage medium may be ROM/RAM, magnetic disk, optical disk, etc.

## Claims

1. A method for sending messages, comprising:
obtaining, by an instant message server, a Send Routing Information ,SRI, request sent by a short message service center ,SMSC, wherein the SRI request carries a mobile terminal identifier of a called user (11);
returning, by the instant message server, to the SMSC an SRI response which carries an instant message server's own address as a mobile switching center ,MSC, address (12);
receiving, by the instant message server, a short message delivered by the SMSC based on the instant message server's address carried by the SRI response (13);
obtaining an instant message identifier of the called user based on a prestored correspondence relationship between the mobile terminal identifier of the called user and the instant message identifier of the called user,
determining, by the instant message server, whether the instant message client of the called user is online based on the instant message identifier of the called user;
if the instant message client of the called user is online, converting the short message into an instant message and delivering the instant message to an instant message client of the called user (14) based on the instant message identifier of the called user;
if the instant message client of the called user is offline, sending the SRI request to an HLR based on the mobile terminal identifier of the called user; determining whether the mobile terminal of the called user is accessible based on the SRI response returned by the HLR; if
the mobile terminal of the called user is accessible, delivering the short message to the mobile terminal of the called user based on the MSC address carried by the SRI response and currently registered by the mobile terminal of the called user; if the mobile terminal of the called user is inaccessible, waiting for an online notification of the instant message client of the called user and an accessibility notification of the mobile terminal of the called user which is sent by the HLR.

2. The method according to claim 1, further comprising:
if the online notification of the instant message client of the called user is received firstly, delivering the message in the form of instant message to the instant message client of the called user, but not delivering the message to the mobile terminal of the called user; and
if the accessibility notification of the mobile terminal of the called user which is sent by the HLR is received firstly, delivering the message in the form of short message to the mobile terminal of the called user, but not delivering the message to the instant message client of the called user.

3. The method according to claim 1 or 2, wherein the obtaining the SRI request sent by the SMSC comprises intercepting the SRI request sent by the SMSC through a Signaling Interception System.

4. A method for sending messages, comprising:
receiving, by an instant message server, an instant message sent by a calling user (21, wherein the instant message carries an instant message identifier of the called user or a mobile terminal identifier corresponding to the instant message identifier of the called user;
prestoring a correspondence relationship between the instant message identifier and the mobile terminal identifier of the called user,
obtaining, by the instant message server, the instant message identifier of the called user, querying whether the instant message client of the called user is offline based on the instant message identifier of the called user;
if the instant message client of the called user is offline, sending, by the instant message server, a Send Routing Information ,SRI, request to a home location register ,HLR, (22) wherein the SRI request carries the mobile terminal identifier of the called user;
receiving, by the instant message server, an SRI response returned by the HLR (23);
determining, by the instant message server, whether the mobile terminal of the called user is accessible based on the SRI response returned by the HLR; if the mobile terminal of the called user is accessible, converting the instant message into a short message and delivering the short message to a mobile switching center ,MSC, currently registered by a mobile terminal of a called user based on a MSC address carried by the SRI response, such that the MSC deliver the short message to the mobile terminal of the called user; if the mobile terminal of the called user is inaccessible, waiting for an online notification of the instant message client of the called user and an accessibility notification of the mobile terminal of the called user which is sent by the HLR.

5. The method according to claim 4, further comprising:
if the online notification of the instant message client of the called user is received firstly, delivering the message in the form of instant message to the instant message client of the called user, but not delivering the message to the mobile terminal of the called user; and
if the accessibility notification of the mobile terminal of the called user which is sent by the HLR is received firstly, delivering the message in the form of short message to the mobile terminal of the called user, but not delivering the message to the instant message client of the called user.

6. An instant message server, comprising:
a signaling processing module (401), configured to obtain an SRI request which carries a mobile terminal identifier of a called user and is sent by an SMSC, and return to the SMSC an SRI response which carries the instant message server's own address as a MSC address;
a message processing module (402), configured to receive a short message delivered by the SMSC based on the instant message server's address carried by the SRI response, convert the short message into an instant message when the instant message client of the called user is online, and send the instant message to an instant message client of the called user;
a storage module (501), configured to store a correspondence relationship between the mobile terminal identifier of the called user and an instant message identifier of the called user;
a acquiring module (502), configured to acquire the instant message identifier of the called user corresponding to the mobile terminal identifier of the called user from the storage module (501);
a determining module (601), configured to determine whether the instant message client is online based on the instant message identifier of the called user; and
the signaling processing module (401) is further configured to send an SRI request to the HLR based on the mobile terminal identifier of the called user if the instant message client of the called user is offline, and if the HLR returns a failed SRI response, which indicates that the mobile terminal of the called user is inaccessible now, the signaling processing module (401) is further configured to receive an online notification of the instant message client of the called user and an accessibility notification of the mobile terminal of the called user which is sent by the HLR.

7. An instant message server, comprising:
a message receiving module (701), configured to receive an instant message sent by a calling user;
a determining module, configured to determine whether the instant message client is online based on an instant message identifier of the called user; a storage module, configured to store a correspondence relationship between the mobile terminal identifier of the called user and an instant message identifier of the called user;
a route requesting module (702), configured to send an SRI request to an HLR, if the instant message client of the called user is offline,
wherein the SRI resquest carries the mobile terminal identifier of the called user;
a signaling receiving module (703), configured to receive an SRI response returned by the HLR;
a message processing module (704), configured to convert the instant message into a short message and deliver the short message to a mobile switching center ,MSC, currently registered by a mobile terminal of a called user based on a MSC address carried by the SRI response such that the MSC deliver the short message to the mobile terminal of the called user, if the mobile terminal of the called user is accessible indicated by the SRI response; and
if the mobile terminal of the called user is inaccessible indicated by the SRI response, the signaling receiving module (703) is further configured to receive an online notification of the instant message client of the called user and an accessibility notification of the mobile terminal of the called user which is sent by the HLR.

## Patentansprüche

1. Verfahren zum Senden von Nachrichten, mit den folgenden Schritten:
Erhalten einer durch eine Kurznachrichtendienstzentrale SMSC gesendeten Anforderung Send Routing Information SRI durch einen Instant-Nachrichtenserver,
wobei die SRI-Anforderung eine Mobilendgerätekennung eines angerufenen Benutzers führt (11);
Zurückgeben einer SRI-Antwort, die die eigene Adresse eines Instant-Nachrichtenservers als Adresse einer Mobilvermittlungsstelle MSC führt, durch den Instant-Nachrichtenserver an die SMSC (12);
Empfangen einer Kurznachricht durch den Instant-Nachrichtenserver, die durch die SMSC auf der Basis der durch die SRI-Antwort geführten Adresse des Instant-Nachrichtenservers abgeliefert wird (13);
Erhalten einer Instant-Nachrichtenkennung des angerufenen Benutzers auf der Basis einer vorgespeicherten Korrespondenzbeziehung zwischen der Mobilendgerätekennung des angerufenen Benutzers und der Instant-Nachrichtenkennung des angerufenen Benutzers,
Bestimmen durch den Instant-Nachrichtenserver, ob der Instant-Nachrichten-Client des angerufenen Benutzers online ist, auf der Basis der Instant-Nachrichtenkennung des angerufenen Benutzers;
wenn der Instant-Nachrichten-Client des angerufenen Benutzers online ist, Umsetzen der Kurznachricht in eine Instant-Nachricht und Abliefern der Instant-Nachricht an einen Instant-Nachrichten-Client des angerufenen Benutzers auf der Basis der Instant-Nachrichtenkennung des angerufenen Benutzers (14);
wenn der Instant-Nachrichten-Client des angerufenen Benutzers offline ist, Senden der SRI-Anforderung zu einem HLR auf der Basis der Mobilendgerätekennung des angerufenen Benutzers; Bestimmen, ob das Mobilendgerät des angerufenen Benutzers zugänglich ist, auf der Basis der durch das HLR zurückgegebenen SRI-Antwort;
wenn das Mobilendgerät des angerufenen Benutzers zugänglich ist, Abliefern der Kurznachricht an das Mobilendgerät des angerufenen Benutzers auf der Basis der durch die SRI-Antwort geführten und gerade durch das Mobilendgerät des angerufenen Benutzers registrierten MSC-Adresse; wenn das Mobilendgerät des angerufenen Benutzers nicht zugänglich ist, Warten auf eine Online-Benachrichtigung des Instant-Nachrichten-Client des angerufenen Benutzers und
eine Zugänglichkeitsbenachrichtigung des Mobilendgeräts des angerufenen Benutzers, die durch das HLR gesendet wird.

2. Verfahren nach Anspruch 1, ferner mit den folgenden Schritten:
wenn die Online-Benachrichtigung des Instant-Nachrichten-Client des angerufenen Benutzers zuerst empfangen wird, Abliefern der Nachricht in der Form einer Instant-Nachricht an den Instant-Nachrichten-Client des angerufenen Benutzers, aber nicht Abliefern der Nachricht an das Mobilendgerät des angerufenen Benutzers; und
wenn die Zugänglichkeitsbenachrichtigung des Mobilendgeräts des angerufenen Benutzers, die durch das HLR gesendet wird, zuerst empfangen wird, Abliefern der Nachricht in der Form einer Kurznachricht an das Mobilendgerät des angerufenen Benutzers, aber nicht Abliefern der Nachricht an den Instant-Nachrichten-Client des angerufenen Benutzers.

3. Verfahren nach Anspruch 1 oder 2, wobei das Erhalten der durch die SMSC gesendeten SRI-Anforderung das Abfangen der durch die SMSC gesendeten SRI-Anforderung durch ein Signalisierungsabfangsystem umfasst.

4. Verfahren zum Senden von Nachrichten, mit den folgenden Schritten:
Empfangen einer durch einen anrufenden Benutzer gesendeten Instant-Nachricht durch einen Instant-Nachrichtenserver (21); wobei die Instant-Nachricht eine Instant-Nachrichtenkennung des angerufenen Benutzers oder eine Mobilendgerätekennung führt, die der Instant-Nachrichtenkennung des angerufenen Benutzers entspricht;
Vorspeichern einer Korrespondenzbeziehung zwischen der Instant-Nachrichtenkennung und der Mobilendgerätekennung des angerufenen Benutzers,
Erhalten der Instant-Nachrichtenkennung des angerufenen Benutzers durch den Instant-Nachrichtenserver, Abfragen, ob der Instant-Nachrichten-Client des angerufenen Benutzers offline ist, auf der Basis der Instant-Nachrichtenkennung des angerufenen Benutzers;
wenn der Instant-Nachrichten-Client des angerufenen Benutzers offline ist, Senden einer Anforderung Send Routing Information SRI durch den Instant-Nachrichtenserver zu einem Heimatregister HLR (22), wobei die SRI-Anforderung die Mobilendgerätekennung des angerufenen Benutzers führt;
Empfangen einer von dem HLR zurückgegebenen SRI-Antwort durch den Instant-Nachrichtenserver (23);
Bestimmen durch den Instant-Nachrichtenserver, ob das Mobilendgerät des angerufenen Benutzers zugänglich ist, auf der Basis der durch das HLR zurückgegebenen SRI-Antwort; wenn das Mobilendgerät des angerufenen Benutzers zugänglich ist, Umsetzen der Instant-Nachricht in eine Kurznachricht und Abliefern der Kurznachricht an eine Mobilvermittlungsstelle MSC, die gerade durch ein Mobilendgerät eines angerufenen Benutzers registriert ist, auf der Basis einer durch die SRI-Antwort geführten MSC-Adresse dergestalt, dass die MSC die Kurznachricht an das Mobilendgerät des angerufenen Benutzers abliefert; wenn das Mobilendgerät des angerufenen Benutzers nicht zugänglich ist, Warten auf eine Online-Benachrichtigung des Instant-Nachrichten-Client des angerufenen Benutzers und eine Zugänglichkeitsbenachrichtigung des Mobilendgeräts des angerufenen Benutzers, die durch das HLR gesendet wird.

5. Verfahren nach Anspruch 4, ferner mit den folgenden Schritten:
wenn die Online-Benachrichtigung des Instant-Nachrichten-Client des angerufenen Benutzers zuerst empfangen wird, Abliefern der Nachricht in der Form einer Instant-Nachricht an den Instant-Nachrichten-Client des angerufenen Benutzers, aber nicht Abliefern der Nachricht an das Mobilendgerät des angerufenen Benutzers; und
wenn die Zugänglichkeitsbenachrichtigung des Mobilendgeräts des angerufenen Benutzers, die durch das HLR gesendet wird, zuerst empfangen wird, Abliefern der Nachricht in der Form einer Kurznachricht an das Mobilendgerät des angerufenen Benutzers, aber nicht Abliefern der Nachricht an den Instant-Nachrichten-Client des angerufenen Benutzers.

6. Instant-Nachrichtenserver, umfassend:
ein Signalverarbeitungsmodul (401), das dafür ausgelegt ist, eine SRI-Anforderung zu erhalten, die eine Mobilendgerätekennung eines angerufenen Benutzers führt und
durch eine SMSC gesendet wird, und eine SRI-Antwort, die die eigene Adresse des Instant-Nachrichtenservers als eine MSC-Adresse führt, an die SMSC zurückzugeben;
ein Nachrichtenverarbeitungsmodul (402), das dafür ausgelegt ist, eine Kurznachricht zu empfangen, die durch die SMSC auf der Basis der durch die SRI-Antwort geführten Adresse des Instant-Nachrichtenservers abgeliefert wird, die Kurznachricht in eine Instant-Nachricht umzusetzen, wenn der Instant-Nachrichten-Client des angerufenen Benutzers online ist, und die Instant-Nachricht zu einem Instant-Nachrichten-Client des angerufenen Benutzers zu senden;
ein Speichermodul (501), das dafür ausgelegt ist, eine Korrespondenzbeziehung zwischen der Mobilendgerätekennung des angerufenen Benutzers und einer Instant-Nachrichtenkennung des angerufenen Benutzers zu speichern;
ein Beschaffungsmodul (502), das dafür ausgelegt ist, die Instant-Nachrichtenkennung des angerufenen Benutzers, die der Mobilendgerätekennung des angerufenen Benutzers entspricht, von dem Speichermodul (501) zu beschaffen;
ein Bestimmungsmodul (601), das dafür ausgelegt ist, auf der Basis der Instant-Nachrichtenkennung des angerufenen Benutzers zu bestimmen, ob der Instant-Nachrichten-Client online ist; und
wobei das Signalverarbeitungsmodul (401) ferner dafür ausgelegt ist, auf der Basis der Mobilendgerätekennung des angerufenen Benutzers eine SRI-Anforderung zu dem HLR zu senden, wenn der Instant-Nachrichten-Client des angerufenen Benutzers offline ist, und das Signalverarbeitungsmodul (401), wenn das HLR eine fehlgeschlagene SRI-Antwort zurückgibt, wodurch angezeigt wird, dass das Mobilendgerät des angerufenen Benutzers momentan nicht zugänglich ist, ferner dafür ausgelegt ist, eine Online-Benachrichtigung des Instant-Nachrichten-Client des angerufenen Benutzers und eine Zugänglichkeitsbenachrichtigung des Mobilendgeräts des angerufenen Benutzers zu empfangen, die durch das HLR gesendet wird.

7. Instant-Nachrichtenserver, umfassend:
ein Nachrichtenempfangsmodul (701), das dafür ausgelegt ist, eine durch einen anrufenden Benutzer gesendete Instant-Nachricht zu empfangen;
ein Bestimmungsmodul, das dafür ausgelegt ist, auf der Basis einer Instant-Nachrichtenkennung des angerufenen Benutzers zu bestimmen, ob der Instant-Nachrichten-Client online ist;
ein Speichermodul, das dafür ausgelegt ist, eine Korrespondenzbeziehung zwischen der Mobilendgerätekennung des angerufenen Benutzers und einer Instant-Nachrichtenkennung des angerufenen Benutzers zu speichern;
ein Routenanforderungsmodul (702), das dafür ausgelegt ist, eine SRI-Anforderung zu einem HLR zu senden, wenn der Instant-Nachrichten-Client des angerufenen Benutzers offline ist, wobei die SRI-Anforderung die Mobilendgerätekennung des angerufenen Benutzers führt;
ein Signalisierungsempfangsmodul (703), das dafür ausgelegt ist, eine von dem HLR zurückgegebene SRI-Antwort zu empfangen;
ein Nachrichtenverarbeitungsmodul (704), das dafür ausgelegt ist, die Instant-Nachricht in eine Kurznachricht umzusetzen und die Kurznachricht auf der Basis einer durch die SRI-Antwort geführten MSC-Adresse an eine Mobilvermittlungsstelle MSC abzuliefern, die gerade durch ein Mobilendgerät eines angerufenen Benutzers registriert ist, dergestalt, dass die MSC die Kurznachricht an das Mobilendgerät des angerufenen Benutzers abliefert, wenn das Mobilendgerät des angerufenen Benutzers wie durch die SRI-Antwort angegeben zugänglich ist; und
wobei, wenn das Mobilendgerät des angerufenen Benutzers wie durch die SRI-Antwort angegeben nicht zugänglich ist, das Signalisierungsempfangsmodul (703) ferner dafür ausgelegt ist, eine Online-Benachrichtigung des Instant-Nachrichten-Client des angerufenen Benutzers und eine Zugänglichkeitsbenachrichtigung des Mobilendgeräts des angerufenen Benutzers zu empfangen, die durch das HLR gesendet wird.

## Revendications

1. Procédé d'envoi de messages, comprenant :
l'obtention, par un serveur de messages instantanés, d'une requête d'Envoi d'Informations de Routage, SRI, envoyée par un centre de service de messages courts, SMSC, la requête SRI portant un identifiant de terminal mobile d'un utilisateur appelé (11) ;
le renvoi, par le serveur de messages instantanés, au SMSC d'une réponse SRI portant l'adresse personnelle d'un serveur de messages instantanés comme adresse de centre de commutation de services mobiles, MSC (12) ;
la réception, par le serveur de messages instantanés, d'un message court délivré par le SMSC en fonction de l'adresse de serveur de messages instantanés portée par la réponse SRI (13) ;
l'obtention d'un identifiant de message instantané de l'utilisateur appelé en fonction d'une relation de correspondance prémémorisée entre l'identifiant de terminal mobile de l'utilisateur appelé et l'identifiant de message instantané de l'utilisateur appelé,
le fait de déterminer, par le serveur de messages instantanés, si le client de messages instantanés de l'utilisateur appelé est en ligne ou non en fonction de l'identifiant de message instantané de l'utilisateur appelé ;
si le client de messages instantanés de l'utilisateur appelé est en ligne, la conversion du message court en un message instantané et la délivrance du message instantané à un client de messages instantanés de l'utilisateur appelé (14) en fonction de l'identifiant de message instantané de l'utilisateur appelé ;
si le client de messages instantanés de l'utilisateur appelé est hors ligne, l'envoi de la requête SRI à un HLR en fonction de l'identifiant de terminal mobile de l'utilisateur appelé ; le fait de déterminer si le terminal mobile de l'utilisateur appelé est accessible ou non en fonction de la réponse SRI renvoyée par le HLR ; si le terminal mobile de l'utilisateur appelé est accessible, la délivrance du message court au terminal mobile de l'utilisateur appelé en fonction de l'adresse MSC portée par la réponse SRI et présentement enregistrée par le terminal mobile de l'utilisateur appelé ; si le terminal mobile de l'utilisateur appelé n'est pas accessible, l'attente d'une notification en ligne du client de messages instantanés de l'utilisateur appelé et d'une notification d'accessibilité du terminal mobile de l'utilisateur appelé qui est envoyée par le HLR.

2. Procédé selon la revendication 1, comprenant en outre :
si la notification en ligne du client de messages instantanés de l'utilisateur appelé est reçue en premier, la délivrance du message sous forme de message instantané au client de messages instantanés de l'utilisateur appelé, mais la non-délivrance du message au terminal mobile de l'utilisateur appelé ; et
si la notification d'accessibilité du terminal mobile de l'utilisateur appelé qui est envoyée par le HLR est reçue en premier, la délivrance du message sous forme de message court au terminal mobile de l'utilisateur appelé, mais la non-délivrance du message au client de messages instantanés de l'utilisateur appelé.

3. Procédé selon la revendication 1 ou 2, dans lequel l'obtention de la requête SRI envoyée par le SMSC comprend l'interception de la requête SRI envoyée par le SMSC par un Système d'Interception de Signalisation.

4. Procédé d'envoi de messages, comprenant :
la réception, par un serveur de messages instantanés, d'un message instantané envoyé par un utilisateur appelant (21), le message instantané portant un identifiant de message instantané de l'utilisateur appelé ou un identifiant de terminal mobile correspondant à l'identifiant de message instantané de l'utilisateur appelé ;
la prémémorisation d'une relation de correspondance entre l'identifiant de message instantané et l'identifiant de terminal mobile de l'utilisateur appelé, l'obtention, par le serveur de messages instantanés, de l'identifiant de message instantané de l'utilisateur appelé, et l'interrogation si le client de messages instantanés de l'utilisateur appelé est hors ligne ou non en fonction de l'identifiant de message instantané de l'utilisateur appelé ;
si le client de messages instantanés de l'utilisateur appelé est hors ligne, l'envoi, par le serveur de messages instantanés, d'une requête d'Envoi d'Informations de Requête, SRI, à un enregistreur de position de rattachement, HLR, (22) ; la requête SRI portant l'identifiant de terminal mobile de l'utilisateur appelé ;
la réception, par le serveur de messages instantanés, d'une réponse SRI renvoyée par le HLR (23) ;
le fait de déterminer, par le serveur de messages instantanés, si le terminal mobile de l'utilisateur appelé est accessible ou non en fonction de la réponse SRI renvoyée par le HLR ; si le terminal mobile de l'utilisateur appelé est accessible, la conversion du message instantané en un message court et la délivrance du message court à un centre de commutation de services mobiles, MSC, présentement enregistré par un terminal mobile de l'utilisateur appelé en fonction d'une adresse MSC portée par la réponse SRI, de telle sorte que le MSC délivre le message court au terminal mobile de l'utilisateur appelé ; si le terminal mobile de l'utilisateur appelé n'est pas accessible, l'attente d'une notification en ligne du client de messages instantanés de l'utilisateur appelé et d'une notification d'accessibilité du terminal mobile de l'utilisateur appelé qui est envoyée par le HLR.

5. Procédé selon la revendication 4, comprenant en outre :
si la notification en ligne du client de messages instantanés de l'utilisateur appelé est reçue en premier, la délivrance du message sous forme de message instantané au client de messages instantanés de l'utilisateur appelé, mais la non-délivrance du message au terminal mobile de l'utilisateur appelé ; et
si la notification d'accessibilité du terminal mobile de l'utilisateur appelé qui est envoyée par le HLR est reçue en premier, la délivrance du message sous forme de message court au terminal mobile de l'utilisateur appelé, mais la non-délivrance du message au client de messages instantanés de l'utilisateur appelé.

6. Serveur de messages instantanés, comprenant :
un module de traitement de signalisation (401), configuré pour obtenir une requête SRI portant un identifiant de terminal mobile d'un utilisateur appelé et est envoyé par un SMSC, et renvoyer au SMSC une réponse SRI portant l'adresse personnelle du serveur de messages instantanés comme adresse MSC ;
un module de traitement de messages (402), configuré pour recevoir un message court délivré par le SMSC en fonction de l'adresse du serveur de messages instantanés portée par la réponse SRI, convertir le message court en un message instantané quand le client de messages instantanés de l'utilisateur appelé est en ligne,
et envoyer le message instantané à un client de messages instantanés de l'utilisateur appelé ;
un module de mémorisation (501), configuré pour mémoriser une relation de correspondance entre l'identifiant de terminal mobile de l'utilisateur appelé et un identifiant de message instantané de l'utilisateur appelé ;
un module d'acquisition (502), configuré pour acquérir l'identifiant de message instantané de l'utilisateur appelé correspondant à l'identifiant de terminal mobile de l'utilisateur appelé provenant du module de mémorisation (501) ;
un module de détermination (601), configuré pour déterminer si le client de messages instantanés est en ligne ou non en fonction de l'identifiant de message instantané de l'utilisateur appelé ; et
le module de traitement de signalisation (401) est configuré en outre pour envoyer une requête SRI au HLR en fonction de l'identifiant de terminal mobile de l'utilisateur appelé si le client de messages instantanés de l'utilisateur appelé est hors ligne, et si le HLR renvoie une réponse SRI erronée, qui indique que le terminal mobile de l'utilisateur appelé est présentement inaccessible, le module de traitement de signalisation (401) est configuré en outre pour recevoir une notification en ligne du client de messages instantanés de l'utilisateur appelé et une notification d'accessibilité du terminal mobile de l'utilisateur appelé qui est envoyée par le HLR.

7. Serveur de messages instantanés, comprenant :
un module de réception de messages (701), configuré pour recevoir un message instantané envoyé par un utilisateur appelant ;
un module de détermination, configuré pour déterminer si le client de messages instantanés est en ligne ou non en fonction d'un identifiant de message instantané de l'utilisateur appelé ;
un module de mémorisation, configuré pour mémoriser une relation de correspondance entre l'identifiant de terminal mobile de l'utilisateur appelé et un identifiant de message instantané de l'utilisateur appelé ;
un module de requête de route (702), configuré pour envoyer une requête SRI à un HLR, si le client de messages instantanés de l'utilisateur appelé est hors ligne, la requête SRI portant l'identifiant de terminal mobile de l'utilisateur appelé ;
un module de réception de signalisation (703), configuré pour recevoir une réponse SRI renvoyée par le HLR ;
un module de traitement de messages (704), configuré pour convertir le message instantané en un message court et délivrer le message court à un centre de commutation de services mobiles, MSC, présentement enregistré par un terminal mobile d'un utilisateur appelé en fonction d'une adresse MSC portée par la réponse SRI de telle sorte que le MSC délivre le message court au terminal mobile de l'utilisateur appelé, si le terminal mobile de l'utilisateur appelé est accessible comme l'indique la réponse SRI ; et
si le terminal mobile de l'utilisateur appelé n'est pas accessible comme l'indique la réponse SRI, le module de réception de signalisation (703) est configuré en outre pour recevoir une notification en ligne du client de messages instantanés de l'utilisateur appelé et une notification d'accessibilité du terminal mobile de l'utilisateur appelé qui est envoyée par le HLR.
